Europäisches Patentamt

(19) European Patent Office

Office européen des brevets

(11) Numéro de publication: **0 133 073**
**B1**

(12) **FASCICULE DE BREVET EUROPEEN**

(45) Date de publication du fascicule du brevet: **11.05.88**

(51) Int. Cl.⁴: **F 16 J 15/36**, F 16 J 15/34

(21) Numéro de dépôt: **84401367.2**

(22) Date de dépôt: **27.06.84**

(54) **Joint tournant.**

(30) Priorité: **27.06.83 FR 8310546**

(43) Date de publication de la demande:
**13.02.85 Bulletin 85/07**

(45) Mention de la délivrance du brevet:
**11.05.88 Bulletin 88/19**

(84) Etats contractants désignés:
**BE DE FR GB IT NL SE**

(56) Documents cités:
**DE-C- 825 025**
**FR-A- 997 406**
**GB-A-1 325 940**
**LU-A- 33 250**
**US-A-2 740 648**

**ANTRIEBSTECHNIK, vol. 12, no. 6, juin 1973,
page A47, Mainz, DE; "V-Ring-Wellendichtung
und VR-Gegenlaufscheibe"**

(73) Titulaire: **ELITE MARINE (société anonyme)**
**70 rue Pascal**
**F-92000 Nanterre (FR)**

(72) Inventeur: **Vallery Radot, Guy**
**39, avenue d'Eylau**
**F-75116 Paris (FR)**
Inventeur: **Martin, Serge**
**87, rue de Saint-Mandé**
**F-93100 Montreuil (FR)**

(74) Mandataire: **Sauvage, Renée**
**Cabinet Sauvage 100 bis, avenue de Saint-Mandé**
**F-75012 Paris (FR)**

## Description

La présente invention a pour objet un joint destiné à assurer l'étanchéité périphérique, au passage d'une cloison, d'un arbre tournant en milieu aqueux.

Plus précisément, elle concerne un joint tournant constitué, d'une part, par une pièce dont une partie au moins forme une butée annulaire et, d'autre part, par un soufflet se terminant, d'un côté, par un bord libre adapté à venir en appui contre ladite butée et, de l'autre côté, par une gaine, ladite pièce et ladite gaine étant adaptées à enserrer et à être bloquées respectivement sur un arbre et sur l'extrémité d'un tube entourant une partie dudit arbre, ou l'inverse.

Cet arbre peut être l'arbre d'hélice d'un bateau et le tube être le tube d'étambot qui entoure cet arbre au niveau où celui-ci traverse la coque du bateau.

En marine, l'étanchéité d'un arbre d'hélice traversant la coque est traditionnellement effectuée par un presse-étoupe à fort coefficient de friction et fuite nécessaire. D'autres moyens ont, certes, été proposés pour assurer cette étanchéité mais soit ils n'ont guère rencontré de succès auprès des utilisateurs, soit ils sont restés à l'état de plans. A cet égard, on peut citer le joint décrit dans le brevet des Etats-Unis n° 2.740.648 qui utilise, d'une part, un anneau en bronze assujetti sur un logement assimilable au tube d'étambot, avec interposition d'un joint torique pour assurer l'étanchéité entre l'anneau et le logement et, d'autre part, un soufflet se terminant, d'un côté par une large face d'appui qui vient en butée contre l'anneau, et de l'autre côté par une gaine entourant l'arbre et bloquée sur ce dernier par un collier de serrage.

Le brevet antérieur est muet quant aux moyens utilisés pour bloquer l'anneau sur le logement. En outre, des essais ont montré que, dans les conditions d'emploi envisagées, un joint torique n'assure pas une étanchéité parfaite: du sable parvient à franchir la zone censée être étanche.

Il a également été déjà proposé (Antriebstechnik, vol. 12, n° 6, juin 1973, page A47, Mainz, DE) une garniture d'étanchéité qui comporte une gaine enserrant un arbre, ladite gaine ayant une extrémité en V dont le bord libre ou lèvre vient en butée contre une contre-rondelle en acier positionnée dans un tube fixe.

Une telle garniture n'est pas applicable à des arbres d'hélice de bateaux, au moins pour les petits diamètres. Le serait-elle, qu'elle n'offrirait ni tolérance de mouvement longitudinal de l'arbre, ni augmentation de l'étanchéité avec la pression: au contraire, avec cette garniture connue, l'exercice d'une pression repousse la lèvre.

On notera au surplus que la contre-rondelle demande un usinage préalable du tube fixe pour accueillir les moyens de retenue périphérique de la contre-rondelle.

La présente invention a pour but d'apporter un joint qui offre une étanchéité totale, qui soit de structure simple, et qui ne demande pas d'usinage spécial de l'arbre ou du tube récepteur duquel dépend la butée.

Ce but est atteint en ce sens que l'invention propose un joint du type précité qui est caractérisé en ce que la butée est constituée par un anneau en un matériau dur et poli adhérisé à l'extrémité d'une gaine en un matériau caoutchouteux adaptée à entourer le tube et à être bloquée sur l'arbre ou sur l'extrémité du tube, selon que le soufflet est lui-même monté sur le tube ou sur l'arbre.

Grâce à cette structure, la pièce formant butée peut être facilement bloquée sur l'arbre ou le tube, par serrage de la gaine sur ledit arbre ou ledit tube, notamment à l'aide de simples colliers de serrage, le problème de l'immobilisation de la pièce et celui de l'étanchéité étant résolus d'un coup.

Dans le dispositif selon le brevet des Etats-Unis n° 2.740.648 précité, le soufflet est constitué d'une matière dont la composition particulière lui confère des propriétés de fort glissement. Ce n'est que grâce à l'utilisation d'une telle matière qu'il est envisageable de donner au bord libre du soufflet une surface d'appui aussi large.

De son côté, l'invention se propose d'apporter un joint qui permette un fonctionnement à très basse friction sans avoir recours à l'utilisation d'une matière spéciale pour le soufflet.

A cet effet, le soufflet en un matériau élastomère classique, formé de spires épaisses, qu'utilise l'invention se caractérise par le fait que l'extrémité opposée à la gaine forme un cône à lèvre mince dont la lèvre à haut coefficient de glissement est adaptée à s'auto-appuyer contre l'anneau en matériau dur et poli.

Ainsi, le soufflet ne porte contre l'anneau en matériau dur et poli que le long d'une simple ligne et la lubrification est assurée par l'eau. La matière elle-même du soufflet ne joue pas de rôle particulier dans le haut coefficient de glissement obtenu.

On comprend qu'une seule pièce, à savoir la gaine à soufflet assure une étanchéité dynamique à pression d'eau variable entre l'arbre d'hélice et le tube d'étambot par appui de sa lèvre contre la butée, et fournit, grâce à ses spires épaisses et sans ressort ajouté, la pression nécessaire au maintien de cet appui et au rattrapage automatique du jeu dû à l'usure et au passage de marche avant en marche arrière ainsi qu'au déplacement de l'arbre sous un angle solide -c'est-à-dire dans toutes les directions- délimité par le cône de débattement du soufflet par rapport à la butée.

Dans une première forme d'exécution, la gaine du soufflet est adaptée à entourer le tube et à être bloquée sur ce dernier tandis que la gaine de la pièce formant butée est adaptée à entourer l'arbre et à être bloquée sur ce dernier.

Dans ce cas, la pièce dont une partie forme butée tourne avec l'arbre et la gaine à soufflet est fixe.

Le soufflet est enfilé sur le tube sensiblement jusqu'à sa jonction avec le cône à lèvre de sorte qu'il utilise le tube comme guide et limite son désalignement à la tolérance prévue quelle qu'en soit la cause (couple au démarrage, chute d'un objet sur le soufflet, poids de la colonne d'eau si le dispositif est placé à plus d'un mètre au-dessous de la flottaison, etc . . .). Cette disposition permet également au soufflet d'être protégé par le tube qui fournit une armature rigide à l'élastomère souple dudit soufflet.

Selon une deuxième forme d'exécution, la gaine du soufflet est adaptée à entourer l'arbre et à être bloquée sur celui-ci, tandis que la gaine de la pièce formant butée est adaptée à entourer le tube et à être bloquée sur ce dernier.

Dans ce cas, la pièce dont une partie forme butée est fixe et la gaine à soufflet est tournante.

Cette forme d'exécution a l'avantage de permettre le remplacement de la gaine à soufflet, lorsque la lèvre est usée, sans désaccoupler l'arbre, et sans mettre l'embarcation hors d'eau. Il est en effet possible d'enfiler et de bloquer sur l'arbre, outre la gaine à soufflet destinée à assurer l'étanchéité, au moins une autre gaine à soufflet en prévision du remplacement de celle qui est en cours d'utilisation. Lorsque l'on désire remplacer une gaine à soufflet dont la lèvre est usée, il suffit, pour assurer une étanchéité provisoire, d'introduire, entre la lèvre et la pièce formant butée, un simple cordon du diamètre adéquat en le tournant vivement sur l'arbre, après quoi l'on peut enlever la gaine à soufflet usée en la découpant et la remplacer par une nouvelle gaine à soufflet que l'on aura simplement à faire glisser le long de l'arbre vers la position d'utilisation et à bloquer sur ledit arbre. Préablement à ce blocage, il faudra bien entendu enlever le cordon qui assurait l'étanchéité provisoire.

Avantageusement, il est prévu, sur la lèvre, un repère adapté à indiquer son degré d'usure.

L'invention sera mieux comprise à la lecture de la description détaillée ci-après faite en référence aux dessins annexés dans lesquels:

— la figure 1 est une vue en coupe longitudinale d'une première forme d'exécution du joint tournant selon l'invention, et

— la figure 2 est une vue en couple longitudinale d'une seconde forme d'exécution du joint tournant selon l'invention.

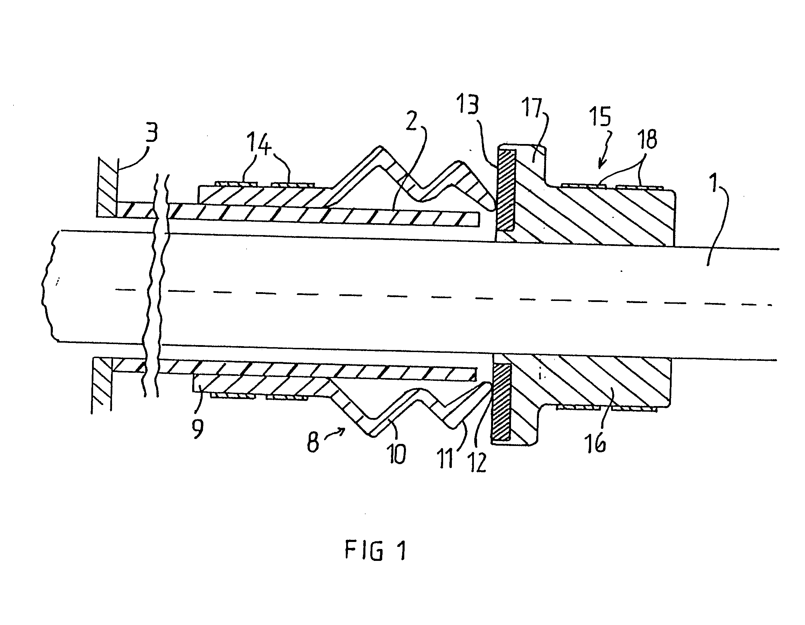

Si l'on se reporte à la figure 1, on voit une partie d'arbre d'hélice 1 partiellement entourée par un tube d'étambot 2 traversant la coque 3 d'un bateau. L'extrémité droite, sur la figure, de l'arbre 1 coopère avec le moteur du bateau et l'extrémité gauche porte l'hélice.

Une pièce annulaire 15 en un matériau élastomère se décomposant en une gaine 16 et un support 17 de surface de butée 13 en un matériau dur et poli adhérisé à l'élastomère est enfilée et bloquée sur l'arbre 1 au moyen de colliers de serrage 18. Par "adhérise" on entend solidarisé par coulée de l'élastomère sur le matériau dur et poli.

Sur le tube 2 est enfilée une gaine à soufflet 8 en matériau élastomère, par exemple en caoutchouc nitrile acrylique, qui se décompose en une gaine 9 enserrant le tube, en un soufflet à spires épaisses 10 et en un cône à lèvre 11. La gaine à soufflet 8 est bloquée sur le tube 2 à l'aide de colliers de serrage 14 qui entourent la gaine 9. La gaine à soufflet 8 utilise le tube 2 comme guide. Lors du montage de la gaine à soufflet 8 sur le tube 2 et sur l'arbre 1, on s'assure, d'une part, que l'extrémité libre du tube 2 arrive au voisinage immédiat du cône à lèvre 11 et, d'autre part, qu'il s'exerce un appui entre la lèvre 12 et la partie formant butée 13 de la pièce 15, de sorte que les spires 10 aient tendance à repousser le cône à lèvre 11 contre la butée 13. Dans cette forme d'exécution, on comprend que la gaine à soufflet 8 est fixe et que la pièce 15 est mobile.

L'eau emplit l'espace compris entre l'arbre 1 et le tube 2 et entre le tube 2 et le soufflet 10. L'étanchéité est assurée à trois niveaux:

— entre des pièces n'ayant pas de mouvement relatif l'une par rapport à l'autre, à savoir entre la gaine 9 et le tube 2, au moyen des colliers de serrage 14 et entre la gaine 16 et l'arbre 1 au moyen des colliers de serrage 18', et

— entre des pièces ayant un mouvement relatif l'une par rapport à l'autre, à savoir entre la gaine à soufflet 8 fixe et la pièce 15 rotative, au moyen de l'appui de la lèvre 12 contre la surface de butée 13.

On notera, d'une part, que, si la pression de l'eau augmente à l'intérieur de l'espace compris entre l'arbre 1 et le tube 2, cela a pour effet d'augmenter l'appui de la lèvre 12 sur la butée 13 et, d'autre part, que la conjonction du cône à lèvre 11 solidaire des spires creuses 10 procure une pression d'autant plus forte sur la butée 13 que la colonne d'eau est plus élevée. Les augmentations de pression s'exerçant sur le joint tournant n'entraînent donc aucune fuite.

Il a été procédé à un essai d'efficacité du joint tournant réalisé selon la forme d'exécution de la figure 1: en mille heures de fonctionnement, aucune fuite, si mineure soit-elle, n'a été constatée.

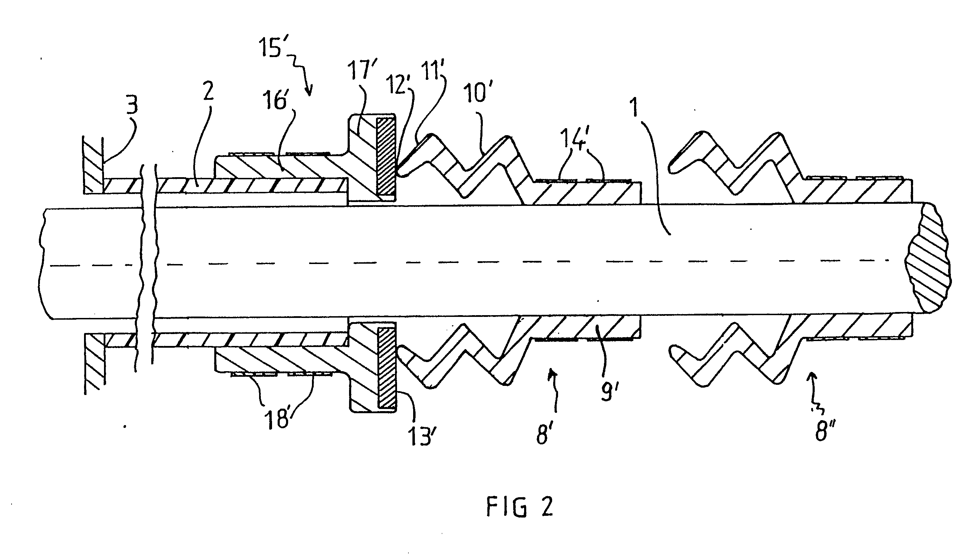

Si l'on se reporte à la figure 2, on retrouve l'arbre 1, le tube 2 et la coque 3. Cette fois cependant, l'élément fixe du joint tournant est constitué par la pièce dont une partie forme butée et l'élément mobile dudit joint est constitué par la gaine à soufflet.

Plus précisément, une gaine à soufflet 8' en matériau élastomère et se décomposant en une gaine 9', en un soufflet 10' et en un cône à lèvre 11' est enfilée sur l'arbre 1 et bloquée sur ce dernier au moyen de colliers de serrage 14' tandis qu'une pièce 15' semblable à la pièce 15 de la figure 1 est bloquée sur le tube 2.

Lorsque l'on met en place la gaine à soufflet 8', on s'assure que la lèvre 12' vient en appui contre la surface 13' de manière telle que les spires 10' exercent une pression propre à maintenir le contact entre la lèvre 12' et la surface 13'.

L'eau emplit l'espace compris entre, d'une part, l'arbre 1 et, d'autre part, le tube 2 et le soufflet 10'. L'étanchéité est assurée, d'une part, par les colliers de serrage 14' et 18' et, d'autre part, par l'appui de la lèvre 12' sur la surface de butée 13'.

Comme il ressort de la figure 2, une seconde gaine à soufflet 8″ est enfilée et bloquée sur l'arbre 1 en prévision du remplacement de la gaine à soufflet 8′. Pour effectuer ce remplacement, il suffit de glisser un cordon d'un diamètre approprié entre la lèvre 12′ et la surface de butée 13′ pour assurer une étanchéité provisoire, de desserrer les colliers de serrage de la gaine à soufflet 8″ pour en permettre le glissement sur l'arbre 1, d'enlever les colliers de serrage 14′, de découper le matériau élastomère de la gaine à soufflet 8′ pour pouvoir la dégager de l'arbre 1, d'avancer la gaine à soufflet 8″ et, après avoir enlevé le cordon assurant l'étanchéité provisoire, de bloquer la gaine à soufflet 8″ sur l'arbre 1 à l'aide de ces colliers de serrage.

Il est ainsi possible de changer la gaine à soufflet 8′ sans désaccoupler l'arbre et sans mettre l'embarcation hors d'eau.

Il est bien entendu que la présente invention n'est pas limitée aux formes d'exécution décrites et représentées. En particulier, les gaines du soufflet et de la pièce formant butée pourraient être immobilisées par tout autre moyen que des colliers de serrage.

**Revendications**

1. Joint tournant constitué, d'une part, par une pièce dont une partie au moins forme une butée annulaire et, d'autre part, par un soufflet (10) se terminant, d'un côté, par un bord libre adapté à venir en appui contre ladite butée et, de l'autre côté, par une gaine (9, 9′), ladite pièce et ladite gaine étant adaptées à enserrer et à être bloquées respectivement sur un arbre (1) et sur l'extrémité d'un tube (2) entourant une partie dudit arbre, ou inversement, caractérisé en ce que la butée (15, 15′) est constituée par un anneau en un matériau dur et poli (13, 13′) adhérisé à l'extrémité d'une gaine (16, 16′) en un matériau caoutchouteux adaptée à entourer et à être bloquée sur l'arbre (1) ou sur l'extrémité du tube (2).

2. Joint tournant selon la revendication 1, caractérisé en ce que l'extrémité opposée à la gaine (9, 9′) du soufflet (10, 10′) forme un cône à lèvre (11, 11′) dont la lèvre (12, 12′) à haut coefficient de glissement est adaptée à s'auto-appuyer contre l'anneau (13, 13′) en matériau dur et poli.

3. Joint tournant selon la revendication 1 ou 2, caractérisé en ce que la gaine (9) du soufflet (10) est adaptée à entourer le tube (2) et à être bloquée sur ce dernier tandis que la gaine (16) de la pièce (15) formant butée est adaptée à entourer l'arbre (1) et à être bloquée sur ce dernier.

4. Joint tournant selon la revendication 3, caractérisé en ce que le soufflet (10) est enfilé sur le tube (2) sensiblement jusqu'à sa jonction avec le cône à lèvre (11).

5. Joint tournant selon la revendication 1 ou 2, caractérisé en ce que la gaine (9′) du soufflet (10′) est adaptée à entourer l'arbre (1) et à être bloquée sur ce dernier, tandis que la gaine (16′) de la pièce (15′) formant butée est adaptée à entourer le tube (2) et à être bloquée sur ce dernier.

6. Joint selon l'une quelconque des revendications 1, 2 ou 5, caractérisé en ce que plusieurs gaines à soufflet (8′, 8″) sont enfilées et bloquées sur l'arbre (1), un étant en service avec son cône à lèvre (11′) en appui sur la pièce annulaire (13′) formant butée et au moins un autre étant en attente, prêt au remplacement du précédent en cas de besoin.

7. Joint selon l'une quelconque des revendications 1 à 6, caractérisé en ce qu'il est prévu, sur la lèvre (12, 12′), un repère adapté à indiquer son degré d'usure.

8. Joint selon l'une quelconque des revendications 1 à 7, caractérisé en ce que l'arbre (1) est l'arbre d'hélice d'un bateau et en ce que le tube (2) est le tube d'étambot entourant l'arbre (1) au niveau où il traverse la coque (3) du bateau.

**Patentansprüche**

1. Drehdichtung, die einerseits von einem Teil, dessen einer Abschnitt wenigstens einen ringförmigen Anschlag bildet, und andererseits von einer Manschette (10) gebildet ist, welche an seiner Seite mit einem freien Rand, welcher in Anlage an den genannten Anschlag gebracht werden kann, und auf der anderen Seite mit einer Hülle (9, 9′) endet, wobei der genannte Teil und die genannte Hülle geeignet sind, eine Welle (1) bzw. das Ende eines einen Abschnitt der genannten Welle umgebenden Rohrs (2) oder umgekehrt zu umfassen und auf diesen festgelegt zu werden, dadurch gekennzeichnet, daß der Anschlag (15, 15′) von einem Ring aus einem harten und polierten Material (13, 13′) gebildet ist, der mit dem Ende einer Hülse (16, 16′) aus einem gummiförmigen Material verbunden ist, die geeignet ist, die Welle (1) oder das Ende des Rohrs (2) zu umfassen und darauf festgelegt zu werden.

2. Drehdichtung nach Anspruch 1, dadurch gekennzeichnet, daß das zu der Hülle (9, 9′) der Manschette (10, 10′) entgegengesetzte Ende einen Lippenkonus (11, 11′) bildet, dessen einen großen Gleitbeiwert aufweisende Lippe (12, 12′) geeignet ist, selbsttätig gegen den Ring (13, 13′) aus einem harten und polierten Material zu drücken.

3. Drehdichtung nach Anspruch 1 oder 2, dadurch gekennzeichnet, daß die Hülle (9) der Manschette (10) geeignet ist, das Rohr (2) zu umfassen und auf diesem festgelegt zu werden, während die Hülse (16) des einen Anschlag bildenden Teils (15) geeignet ist, die Welle (1) zu umfassen und auf dieser festgelegt zu werden.

4. Drehdichtung nach Anspruch 3, dadurch gekennzeichnet, daß die Manschette (10) auf das Rohr (2) bis zu dessen im wesentlichen Zusammenführen mit dem Lippenkonus (11) aufgeschoben ist.

5. Drehdichtung nach Anspruch 1 oder 2, dadurch gekennzeichnet, daß die Hülle (9′) der Manschette (10′) geeignet ist, die Welle (1) zu umfassen und auf dieser festgelegt zu werden, während die Hülse (16′) aus den Anschlag bildenden Teils (15′) geeignet ist, das Rohr (2) zu umfassen und auf diesem festgelegt zu werden.

6. Dichtung nach irgendeinem der Ansprüche 1, 2 oder 5, dadurch gekennzeichnet, daß mehrere Manschettenhüllen (8', 8'') auf die Welle (1) aufgeschoben und auf dieser festgelegt sind, wobei sich eine von ihnen mit ihrem Lippenkonus (11') in Anlage an dem einen Anschlag bildenden, ringförmigen Teil (13') im Einsatz und wenigstens einen in Bereitschaft befindet, die zum Austausch der vorhergehenden im Bedarfsfall bereit ist.

7. Dichtung nach irgendeinem der Ansprüche 1 bis 6, dadurch gekennzeichnet, daß an der Lippe (12, 12') eine Kennzeichnung vorgesehen ist, die zum Anzeigen des Abnutzungsmaßes geeignet ist.

8. Dichtung nach irgendeinem der Ansprüche 1 bis 7, dadurch gekennzeichnet, daß die Welle (1) die Schraubenwelle bei einem Schiff ist und daß das Rohr (2') das Steven-Rohr ist, welches die Welle (1) auf der Höhe umgibt, wo sie den Schiffsrumpf (3) durchquert.

**Claims**

1. Rotary seal formed, on the one hand, by a piece a part at least of which forms an annular stop and, on the other hand, by a bellows (10) ending, on one side, in a free edge adapted to bear against said stop and, on the other side, in a sheath (9, 9'), said piece and said sheath being adapted to clamp and to be locked respectively on a shaft (1) and on the end of a tube (2) surrounding a part of said shaft, or conversely, characterized in that said stop (15, 15') is formed by a ring made from a hard and polished material (13, 13') bonded to the end of a sheath (16, 16') made from a rubbery material adapted to surround and to be locked on the shaft (1) or on the end of the tube (2).

2. Rotary seal according to claim 1, characterized in that the end of the bellows (10, 10'), opposite the sheath (9, 9'), forms a lipped cone (11, 11') whose lip (12, 12') with a high sliding coefficient is adapted to self-bear against the hard and polished material ring (13, 13').

3. Rotary seal according to claim 1 or 2, characterized in that the sheath (9) of the bellows (10) is adapted to surround the tube (2) and to be locked thereon whereas the sheath (16) of the piece (15) forming a stop is adapted to surround the shaft (1) and to be locked thereon.

4. Rotary seal according to claim 3, characterized in that the bellows (10) is fitted on to the tube (2) substantially as far as its junction with the lipped cone (11).

5. Rotary seal according to claim 1 or 2, characterized in that the sheath (9') of the bellows (10') is adapted to surround the shaft (1) and to be locked thereon, whereas the sheath (16') of the piece (15') forming a stop is adapted to surround the tube (2) and to be locked thereon.

6. Seal according to any one of claims 1, 2 or 5, characterized in that several sheaths with bellows (8', 8'') are fitted and locked on the shaft (1), one being in service with its lipped cone (11') bearing on the piece (13') forming a stop and at least one other standing by ready to replace the preceding one should the need arise.

7. Seal according to any one of claims 1 to 6, characterized in that a reference is provided on the lip (12, 12') for indicating the degree of wear thereof.

8. Seal according to any one of claims 1 to 7, characterized in that the shaft (1) is the propeller shaft of a boat and in that the tube (2') is the propeller post surrounding the shaft (1) at the level where it passes through the hull (3) of the boat.

FIG 1

0 133 073

FIG 2

0 133 073